## Europäisches Patentamt
## European Patent Office
## Office européen des brevets

(19)

(11) Numéro de publication: **0 013 229**
**B1**

(12)

# FASCICULE DE BREVET EUROPEEN

(45) Date de publication du fascicule du brevet: **29.09.82**

(51) Int. Cl.³: **C 08 F 10/02,** C 08 F 2/00

(21) Numéro de dépôt: **79401045.4**

(22) Date de dépôt: **20.12.79**

(54) **Procédé pour l'élargissement de la répartition moléculaire du polyéthylène par emploi de deux réacteurs et de deux séparateurs et appareil pour sa mise en oeuvre.**

(30) Priorité: **28.12.78 FR 7836625**

(43) Date de publication de la demande:
**09.07.80 Bulletin 80/14**

(45) Mention de la délivrance du brevet:
**29.09.82 Bulletin 82/39**

(84) Etats contractants désignés:
**AT BE DE GB IT NL SE**

(56) Documents cités:
**DE - A - 2 131 445**
**FR - A - 2 047 266**
**FR - A - 2 346 374**

(73) Titulaire: **Société Chimique des Charbonnages**
**Tour Aurore Place des Reflets Cédex no 5**
**F-92080 Paris La Défense 2 (FR)**

(72) Inventeur: **Nicco, Adrien**
**12, rue de l'Egalité**
**F-62400 Bethune (FR)**

(74) Mandataire: **Dubost, Thierry Pierre**
**Société Chimique des Charbonnages B.P. No. 1**
**Service Brevets**
**F-62160 Bully Les Mines (FR)**

Courier Press, Leamington Spa, England.

## Procédé pour l'élargissement de la répartition moléculaire du polyéthylène par emploi de deux réacteurs et de deux séparateurs et appareil pour sa mise en oeuvre

La présente invention concerne la polymérisation de l'éthylène sous haute pression et à température élevée et plus particulièrement l'élargissement de la répartition moléculaire du polyéthylène par emploi de deux réacteurs et de deux séparateurs.

Il est connu de polymériser l'éthylène à pression et température élevées grâce à un système catalytique de type Ziegler comprenant d'une part au moins un composé halogéné de métal de transition et d'autre part au moins un activateur choisi parmi les hydrures et les composés organométalliques des métaux des groups I à III de la Classification Périodique. Toutefois la fabrication, selon ce procédé, de polyéthylène haute densité ou de copolymères d'éthylène ayant un indice de fluidité (mesuré selon la norme ASTM D 1238—73) compris entre 0,1 et environ et un indice de polydispersité (rapport $Mw/Mn$ de la masse moléculaire moyenne en poids à la masse moléculaire moyenne en nombre) supérieur à 8 est particulièrement délicate. Notamment le choix du système catalytique, le choix des conditions de température et de pression et l'emploi d'un réacteur comportant plusieurs zones fonctionnant dans des conditions différentes ne suffisent pas à modifier l'indice de polydispersité dans le sens désiré.

Par ailleurs, le brevet français no. 2.047.266 décrit un procédé de polymérisation de l'éthylène en deux stades sous une pression comprise entre 100 et 200 bars, selon lequel ces stades de polymérisation peuvent être réalisés dans deux réacteurs fonctionnant en parallèle mais doivent être réalisés avec des catalyseurs et des conditions de température différents dans chaque stade.

Une solution au problème précité a été décrite dans le brevet français no. 2.346.374, consistant à liquéfier partiellement à une température de −50°C à +20°C la phase gazeuse provenant d'un premier séparateur sous pression de 80 à 250 bars, à détendre sous une pression de 10 à 60 bars puis à séparer ce flux dans un second séparateur, la phase liquide étant recomprimée et envoyée vers une première zone du réacteur tandis que la phase gazeuse est recomprimée et envoyée vers une seconde zone du réacteur. Cette solution, qui est techniquement satisfaisante puisqu'elle permet d'atteindre un indice de polydispersité de 15 environ, présente un inconvénient économique car elle est coûteuse en énergie.

Un premier objet de la présente invention est donc de proposer un procédé de fabrication de polymères d'éthylène ayant un indice de fluidité (selon ASTM D 1238—73) compris entre 0,1 et 2 environ, un indice de polydispersité supérieur à 8 environ et comportant suffisamment de très hautes masses moléculaires, toutes propriétés qui sont nécessaires pour la transformation desdits polymères par extrusion-soufflage, ledit procédé ayant un coût énergétique plus faible que les procédés connus.

Il est également connu de polymériser l'éthylène à pression et température élevées grâce à des initiateurs radicalaires, tels que l'oxygène, les peroxydes et les peresters, pour former du polyéthylène de basse densité.

Dans le cas d'un tel procédé, un second objet de la présente invention est de proposer une méthode permettant de mélanger des polyéthylènes basse densité de masses moléculaires et/ou de structures différentes.

Ces objets réalisés conformément à la présente invention, consistent en un procédé utilisant:

— un premier réacteur dans lequel la polymérisation de l'éthylène est réalisée en présence de moins de 0,1% d'hydrogène et dont l'effluent est évacué, au travers d'une vanne de détente, dans un premier séparateur fonctionnant sous pression de 150 à 500 bars, l'éthylène ainsi séparé étant recyclé vers ledit premier réacteur et le polymère séparé étant évacué dudit premier séparateur vers un mélangeur,

— un second réacteur dans lequel la polymérisation de l'éthylène est réalisée en présence de 0,2 à 5% d'hydrogène et dont l'effluent est évacué, au travers d'une vanne de détente, dans ledit mélangeur, et

— un second séparateur fonctionnant sous pression de 100 à 400 bars et alimenté par les effluents provenant du mélangeur, l'éthylène ainsi séparé étant au moins en partie recyclé vers ledit second réacteur et le mélange polymère séparé étant évacué dudit second séparateur vers une trémie de dégazage fonctionnant sous pression de 1 à 10 bars, le polymère sortant de ladite trémie étant récupéré tandis que l'éthylène gazeux séparé dans la trémie est recyclé vers l'un et/ou l'autre des réacteurs.

Le procédé selon l'invention peut être mis en oeuvre en polymérisant l'éthylène en présence de 1 à 50% en poids d'un hydrocarbure inerte tel que propane ou butane par exemple.

Le procédé de l'invention est mis en oeuvre de manière continue et peut être effectué en utilisant des réacteurs soit autoclaves soit tubulaires ou bien en utilisant un réacteur de chaque type. Lesdits réacteurs pourront comporter chacun une ou plusieurs zones réactionnelles. L'invention est également applicable à la copolymérisation de l'éthylène avec des $\alpha$-oléfines telles que propylène et butène-1 par exemple, ainsi qu'à la terpolymérisation de l'éthylène avec une $\alpha$-oléfine telle que le propylène et avec une dioléfine non conjuguée.

Le procédé selon l'invention peut être mis en oeuvre grâce à un système catalytique de type Ziegler comprenant d'une part au moins un composé halogéné de métal de transition et d'autre part au moins un activateur choisi parmi les hydrures et les composés organométalliques des métaux des groupes I à III de la Classification Périodique. Parmi les composés halogénés de métal de transition utilisables, bien qu'ils soient très nombreux, on peut citer les complexes $\pi$-allylique ou benzylique du chrome, du zirconium et du titane, les tri-chlorures de vanadium et de titane (ce dernier éventuellement syncristallisé avec le chlorure d'aluminium sous le forme $TiCl_3$ 1/3 $AlCl_3$) éventuellement fixés sur un support comprenant par exemple un halogénure, un mono-halogénure ou un hydrohalogénure de magnésium. Tous ces composés peuvent être utilisés en présence d'agents complexants tels que alcools lourds, alcoolates métalliques, silicates d'alkyle, aryl ou alkylsiloxanes, éthers ou amines. Parmi les activateurs utilisables on peut citer notamment les trialkylaluminiums, les halogénodialkylaluminiums et les alkyl-siloxalanes. Le procédé selon l'invention peut aussi être mis en oeuvre grâce à des initiateurs radicalaires connus tels que l'oxygène, des peroxydes et/ou des peresters. Ces catalyseurs sont de préférence employés sous forme de solutions dans un diluant inerte ou bien sous forme de dispersion.

Le système catalytique sera choisi par l'homme de l'art en fonction de la température du réacteur dans lequel on veut l'utiliser, c'est-à-dire qu'un système catalytique donné sera utilisé dans les conditions de température pour lesquelles sa stabilité thermique et sa réactivité vis-à-vis de l'éthylène sont connues. De même le temps de séjour moyen du système catalytique sera choisi par l'homme de l'art en fonction de la température du réacteur dans lequel on l'utilise et sera généralement compris entre 5 et 80 secondes environ; ce temps sera d'autant plus court que la température d'utilisation du catalyseur sera plus élevée.

Il faut comprendre que, selon l'invention, la disposition du premier et du second réacteur par rapport au premier séparateur et au mélangeur est interchangeable. Ainsi l'invention vise, de la même façon que le procédé décrit précédemment, un procédé utilisant:

— un premier réacteur dans lequel la polymérisation de l'éthylène est réalisée en présence de moins de 0,1% en moles d'hydrogène et dont l'effluent est évacué, au travers d'une vanne de détente, dans un mélangeur,
— un second réacteur dans lequel la polymérisation de l'éthylène est réalisée en présence de 0,2 à 5% en moles d'hydrogène et dont l'effluent est évacué, au traverse d'une vanne de détente, dans un premier séparateur fonctionnant sous pression de 150 à 500 bars, l'éthylène ainsi séparé étant recyclé vers ledit second réacteur et le polymère séparé étant évacué dudit premier séparateur vers ledit mélangeur, et
— un second séparateur fonctionnant sous pression de 100 à 400 bars et alimenté par les effluents provenant du mélangeur, l'éthylène ainsi séparé étant au moins en partie recyclé vers ledit second réacteur et le mélange polymère séparé étant évacué dudit second séparateur vers une trémie de dégazage fonctionnant sous pression de 1 à 10 bars, le polymère sortant de ladite trémie étant récupéré tandis que l'éthylène gazeux séparé dans la trémie est recyclé vers l'une et/ou l'autre des réacteurs.

Dans le procédé selon l'invention, l'éthylène séparé dans le second séparateur est recyclé vers le second réacteur en partie ou bien, de préférence, en totalité; à cet effet, il est recomprimé à la pression dudit second réacteur. Lorsqu'une partie seulement de l'éthylène séparé dans le second séparateur est recyclée vers le second réacteur, la partie restante est recyclée vers le premier réacteur; à ceteffet, elle est recomprimée à la pression dudit premier réacteur.

Conformément à l'invention, l'éthylène gazeux séparé dans la trémie est recyclé vers l'une et/ou l'autre des réacteurs; de préférence cet éthylène est recyclé vers un seul réacteur afin de ne pas ajouter à la complexité du procédé. Par exemple il sera recyclé vers le second réacteur dans le mode de réalisation décrite en premier lieu précédemment tandis qu'il sera recyclé vers le premier réacteur dans le mode de réalisation décrit en second lieu. A cet effet il est recomprimé à la pression du second séparateur, joint au courant d'éthylène provenant de celui-ci puis recomprimé avec ledit courant comme décrit précédemment.

Dans le procédé selon l'invention, chacun des réacteurs fonctionne dans des conditions de pression comprise entre 600 et 3000 bars et de température comprise entre 160° et 320°C. Les conditions de fonctionnement du premier réacteur peuvent être choisies différentes de celles du second réacteur; néanmoins, pour des raisons de régularité de marche de l'installation, on trouve le plus souvent avantageux de choisir des conditions de fonctionnement voisines dans les deux réacteurs.

Comme on l'a indiqué précédemment, le trait caractéristique de l'invention consiste notamment en ce que les concentrations d'hydrogène dans les deux réacteurs sont très différentes. Ainsi il est préféré que le rapport de la concentration d'hydrogène dans le second réacteur à la concentration d'hydrogène dans le premier réacteur soit supérieur ou égal à 5. La concentration d'hydrogène dans le premier réacteur peut aussi être nulle. De même, afin d'atteindre efficacement les différents objets de l'invention exposés précédemment, il est préféré que les débits d'alimentation de chaque réacteur soient choisis de telle sorte que la part du polymère total produit dans le premier réacteur soit comprise entre 20 et 60% en poids.

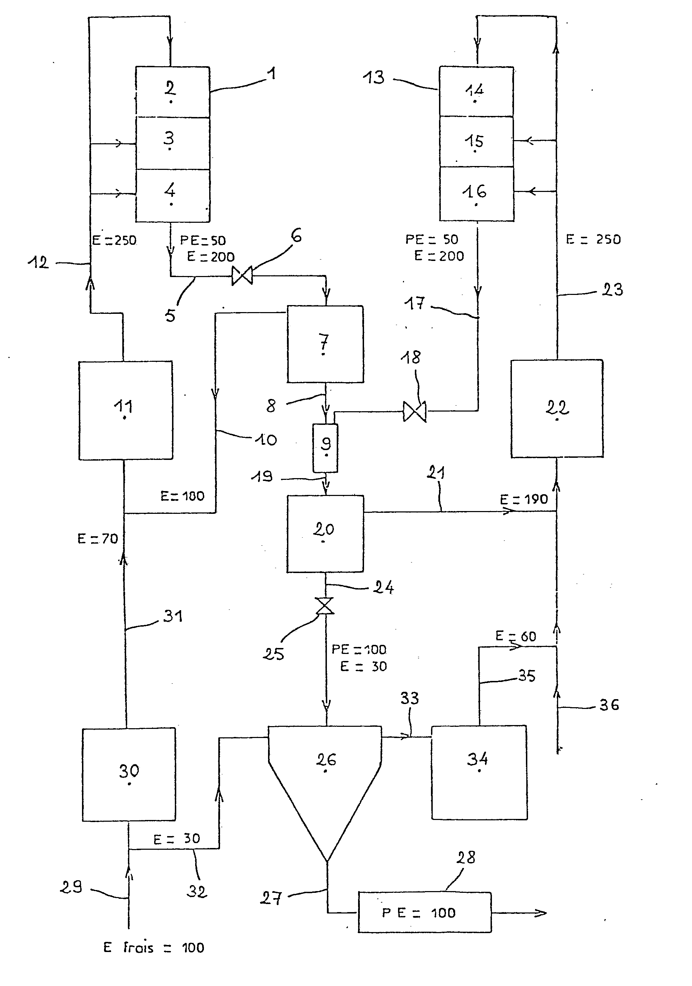

L'homme de l'art comprend que le premier réacteur fabrique un polymère de masse moléculaire élevée et de viscosité très élevée, tandis que le second réacteur fabrique un polymère de basse masse moléculaire et de viscosité très faible. Lorsqu'on veut fabriquer un polymère final d'indice de polydispersité supérieur ou égal à 8, le rapport de la viscosité du polymère fabriqué dans le premier réacteur à la viscosité du polymère fabriqué dans le second réacteur est toujours supérieur ou égal à 2000 et le mélangeur disposé entre les deux séparateurs doit donc être prévu en conséquence. Toutefois la conception de ce mélangeur est un problème à la portée de l'homme de l'art compte tenu que ce mélangeur reçoit comme fluide moteur un mélange énergiquement divisé de particules de polymère liquide et d'éthylène gazeux, la proportion pondérale du polymère dans ledit fluide moteur étant égale au taux de conversion de la réaction de polymérisation c'est-à-dire proche de 20% en général. Un exemple de mélangeur utilisable dans le cadre de la présente invention est constitué par le "jet-mixer" mentionné dans Perry's Chemical Engineers Handbook, 4e Edition, p. 21—12 et représenté sur la figure 6—28 de la même référence.

Ainsi, de l'exposé détaillé des traits caractéristiques et de deux modes de réalisation de l'invention, il résulte l'énoncé général de l'invention, consistant en un procédé de polymérisation de l'éthylène sous une pression comprise entre 600 et 3000 bars et à une température comprise entre 160°C et 320°C, dans deux réacteurs fonctionnant en parallèle, un premier réacteur dans lequel la réaction est réalisée en présence de moins de 0,1% d'hydrogène pour fabriquer un polymère de masse moléculaire élevée, un second réacteur dans lequel la réaction est réalisée en présence de 0,2 à 5% d'hydrogène pour fabriquer un polymère de basse masse moléculaire, les effluents de ces deux réacteurs étant détendus puis dirigés vers un ensemble de deux séparateurs interconnectés de façon à mélanger efficacement les polymères fabriqués dans les deux réacteurs en recyclant dans le circuit d'alimentation du premier réacteur le moins possible d'hydrogène de façon telle que la proportion d'hydrogène dans ledit premier réacteur demeure inférieure à 0,1% en moles.

Le procédé selon l'invention peut être mis en oeuvre en combinaison avec le procédé décrit dans le brevet français no. 2.313.399, c'est-à-dire en refroidissant le premier séparateur par l'injection, entre la vanne de détente du réacteur (premier ou second selon le mode de réalisation choisi), déversant ses effluents dans ledit séparateur, et l'entrée dudit séparateur, d'éthylène froid à une pression inférieure à celle du premier séparateur. L'éthylène froid ainsi injecté, en général à une pression comprise entre 20 et 180 bars, est soit capté en aval d'un réfrigérant sur le circuit de recyclage du gaz séparé dans le premier séparateur soit alimenté directement à partir d'un circuit de distribution d'éthylène à la pression désirée; dans le premier cas, le circuit d'alimentation en éthylène froid comportera une vanne de détente pour abaisser la pression depuis la valeur régnant dans le premier séparateur jusqu'à la valeur souhaitée à l'entrée du dispositif d'injection. On effectuera l'injection de l'éthylène froid au moyen d'un dispositif tel que celui décrit dans le brevet français 2.313.399.

Le procédé selon l'invention peut être, lorsque la polymérisation est effectuée au moyen d'un système catalytique de type Ziegler, utilisé en combinaison avec le procédé de désactivation de catalyseur décrit dans le brevet français no. 2.302.305 et consistant à injecter dans un réacteur, à proximité de la sortie de celui-ci, au moins un sel alcalin ou alcalino-terreux d'acide carboxylique choisi de façon que ses produits de réaction avec le catalyseur demeurent dans le polymère. Dans le cadre de la présente invention, ledit sel sera avantageusement injecté, à l'état fondu ou bien dilué dans un hydrocarbure, soit près de la sortie de chaque réacteur soit dans le séparateur.

L'invention sera mieux comprise à la lumière de la description de la figure unique représentant un mode préféré de réalisation. Sur cette figure sont portés, en différents points de l'installation, les valeurs pondérales des flux d'éthylène (abréviation E) et de polyéthylène (abréviation PE) au point considéré. La figure représente une installation de polymérisation de l'éthylène sous haute pression comprenant un premier réacteur 1 du type autoclave agité, divisé intérieurement, au moyen d'écrans, en trois zones 2, 3 et 4. A partir de la zone 4, un conduit 5 de prélèvement du mélange réactionnel aboutit, à travers une vanne de détente 6, au premier séparateur 7. Ce séparateur comporte d'une part á sa base un conduit 8 d'évacuation du polymère qui rejoint le mélangeur 9, et d'autre part à son sommet un conduit 10 qui aboutit, à travers un réfrigérant non représenté sur la figure, à l'entrée d'un premier hypercompresseur 11. A la sortie dudit hypercompresseur, un conduit 12 alimente les différentes zones du réacteur 1 en éthylène sous haute pression. L'installation de polymérisation comprend d'autre part un second réacteur 13 du type autoclave agité divisé intérieurement, au moyen d'écrans, en trois zones 14, 15 et 16. A partir de la zone 16, un conduit 17 de prélèvement du mélange réactionnel aboutit, à travers une vanne de détente 18, à l'entrée du mélangeur 9. A la sortie dudit mélangeur, un conduit 19 de prélèvement du mélange aboutit au second séparateur 20. Ce séparateur comporte à son sommet un conduit 21 qui aboutit, à travers un réfrigérant non représenté sur la figure, à l'entrée (aspiration) d'un second hypercompresseur 22. A la sortie (refoulement) dudit hypercompresseur, un conduit 23 alimente les différentes zones du réacteur 13 en éthylène sous haute pression. Le séparateur 20 comporte en outre à sa base un conduit 24 d'évacuation du polymère qui rejoint, à travers une vanne de détente 25, la trémie de dégazage 26. Au fond de ladite trémie, un conduit 27 transfère le polymère dégazé à un dispositif de malaxage 28.

A partir d'une source d'éthylène non représentée sur la figure, un conduit 29 se divise en une branche principale alimentant un premier compresseur 30 à la sortie (refoulement) duquel l'éthylène comprimé est transféré à l'entrée (aspiration) du premier hypercompresseur 11 par le moyen d'un conduit 31, et en une branche auxiliaire 32 alimentant le trémie 26, un conduit 33 transfère le mélange de l'éthylène extrait du polymère et de l'éthylène additionnel provenant de la source (non représentée) par la branche auxiliaire 32 jusqu'à l'entrée (aspiration) d'un second compresseur 34. A partir de ce compresseur, un conduit 35 de transfert de l'éthylène comprimé rejoint successivement un conduit 36 provenant d'une source d'hydrogène non représentée sur la figure puis le conduit 21 et aboutit à l'entrée (aspiration) de l'hypercompresseur 22.

La présente invention conformément au premier mode de réalisation décrit précédemment et représenté sur la figure, concerne donc un appareil pour effectuer la polymérisation de l'éthylène comprenant un premier réacteur, un premier séparateur, une vanne de détente située à la sortie du premier réacteur et reliée au premier séparateur, un mélangeur relié à la base du premier séparateur, un premier hypercompresseur dont l'entrée est reliée à la sortie du premier séparateur et dont la sortie est reliée au premier réacteur, un second réacteur, une vanne de détente située à la sortie du second réacteur et reliée au mélangeur, un second séparateur relié à la sortie du mélangeur, un second hypercompresseur dont l'entrée est reliée à la sortie du second séparateur et dont la sortie est reliée au second réacteur, une trémie, une vanne de détente située à la base du second séparateur et reliée à la trémie, un compresseur dont l'entrée est reliée au sommet de la trémie et dont la sortie est reliée à l'entrée du second hypercompresseur, une source d'hydrogène connectée à une entrée du second hypercompresseur et une source d'éthylène connectée à une entrée du premier hypercompresseur.

La présente invention, conformément au second mode de réalisation décrit précédemment, concerne aussi un appareil pour effectuer la polymérisation de l'éthylène comprenant un premier réacteur, un mélangeur, une vanne de détente située à la sortie du premier réacteur et reliée au melangeur, un second séparateur relié à la sortie du mélangeur, un second réacteur, un premier séparateur, une vanne de détente située à la sortie du second réacteur et reliée au premier séparateur, un premier hypercompresseur dont l'entrée est reliée au second séparateur et dont la sortie est reliée au premier réacteur, un second hypercompresseur dont l'entrée est reliée au second séparateur et dont la sortie est reliée au second réacteur, une trémie, une vanne de détente située à la base du second séparateur et reliée à la trémie, un compresseur dont l'entrée est reliée au sommet de la trémie et dont la sortie est reliée à l'entrée du premier hypercompresseur, une source d'éthylène connectée à l'entrée du compresseur et une source d'hydrogène connectée à l'entrée du second hypercompresseur. Selon ce mode de réalisation, l'appareil selon l'invention peut en outre comporter un conduit reliant la sortie du second séparateur à l'entrée du second hypercompresseur.

Sans sortir du cadre de l'invention on pourra, dans chaque mode de réalisation, remplacer l'ensemble constitué du premier hypercompresseur et du second hypercompresseur par un hypercompresseur unique comprenant une première série de cylindres reliée au premier réacteur et une seconde série de cylindres reliée au second réacteur.

L'invention sera mieux comprise à la lumière des exemples suivants qui ont pour objet de l'illustrer.

Exemple 1

La polymérisation de l'éthylène est effectuée dans une installation conforme à la figure de la planche unique. Les réacteurs 1 et 13 sont des autoclaves de forme cylindrique munis intérieurement d'écrans métalliques qui délimitent trois zones de volume identique.

Le réacteur 1 fonctionne sous une pression de 1300 bars et est alimenté par 50% de l'éthylène total. La température est de 190°C dans la zone 2, 240°C dans la zone 3 et de 290°C dans la zone 4. On maintient dans ce réacteur une concentration en hydrogène nulle ou inférieure aux limites de détection analytique.

Le réacteur 13 fonctionne sous une pression de 900 bars et est alimenté par 50% de l'éthylène total. La température est de 180°C dans la zone 14, 230°C dans la zone 15 et 280°C dans la zone 16. On maintient dans ce réacteur une concentration en hydrogène égale à 5% en moles. Le système catalytique injecté dans chacun des réacteurs comprend d'une part le composé de formule $TiCl_3$ 1/3 $AlCl_3$, $3MgCl_2$ obtenu par cobroyage du trichlorure de titane violet et du chlorure de magnésium anhydre et d'autre part du diméthyléthyldiéthylsiloxalane en quantité telle que le rapport atomique Al/Ti soit égal à 3. Le temps de séjour de ce système catalytique dans chaque réacteur est de 25 secondes.

Le séparateur 7 fonctionne sous une pression de 220 bars, le séparateur 20 sous une pression de 180 bars. Les flux d'éthylène (par abréviation E) et de polyéthylène (par abréviation PE) traversant les différents conduits de l'installation sont ceux indiqués sur la figure de la planche unique; on observera notamment que le taux de conversion de la réaction de polymérisation est de 20% dans chaque réacteur. Un désactivateur du catalyseur, constitué essentiellement de stéarate de calcium pur fondu, est injecté à la sortie de chaque réacteur.

Le polymère obtenu est caractérisé par les différentes propriétés indiquées ci-dessous, notamment l'indice de fluidité mesuré selon la norme ASTM D 1238—73, la masse moléculaire moyenne en poids Mw mesurée par chromatographie de perméation de gel, l'indice de polydispersité défini plus haut et la masse volumique.

Les valeurs expérimentales de ces propriétés sont les suivantes:

| | | |
|---|---|---|
| masse volumique | : | $0,958 \text{ g/cm}^3$ |
| indice de fluidité | : | $0,15 \text{ g/10 mn}$ |
| Mw=155 000 | | |
| Indice de polydispersité (Mw/Mn)=14,1 | | |

Exemple 2

La polymérisation de l'éthylène est effectuée dans une installation, décrite précédemment, conforme au second mode de réalisation de l'invention. Les deux réacteurs, indentiques à ceux de l'exemple 1, fonctionnent chacun sous une pression de 1200 bars et sont alimentés chacun par 50% de l'éthylène total. Ils fonctionnent selon des températures étagées de manière identique comme suit: 200°C dans la première zone, 220°C dans la seconde zone et 240°C dans la troisième zone. Le système catalytique injecté dans chacun des deux réacteurs comprend d'une part du trichlorure de titane violet $TiCl_3$, 1/3 $AlCl_3$ et d'autre part du trioctyl-aluminium en quantité telle que le rapport atomique Al/Ti soit égal à 3. Le temps de séjour moyen de ce système dans chaque réacteur est de 60 secondes.

Conformèment au procédé selon l'invention, la concentration d'hydrogène est maintenue à la valeur de 0,1% en moles dans le premier réacteur et de 1% en moles dans le second réacteur. Le premier séparateur fonctionne à la pression de 300 bars, le second séparateur fonctionne à la pression de 250 bars. Enfin le catalyseur est désactivé de même que dans l'exemple 1.

Le polymère obtenu est caractérisé par les mêmes propriétés que précédemment, lesquelles ont les valeurs expérimentales suivantes:

| | | |
|---|---|---|
| masse volumique | : | $0,957 \text{ g/cm}^{\cdot}$ |
| indice de fluidité | : | $0,9 \text{ g/10 mr}$ |
| Mw=160 000 | | |
| Indice de polydispersité | : | 8,4 |

**Revendications**

1. Procédé de polymérisation de l'éthylène ou de copolymérisation de l'éthylène avec une $\alpha$-oléfine out de terpolymérisation de l'éthylène avec une $\alpha$-oléfine et avec une dioléfine non conjuguée, sous une pression comprise entre 600 et 3000 bars et à une température comprise entre 160° et 320°C, mis en oeuvre dans deux réacteurs fonctionnant en parallèle, caractérisé en ce que dans le premier réacteur la réaction est réalisée en présence de moins de 0,1% en moles d'hydrogène pour fabriquer un polymère de masse moléculaire élevée, et dans un second réacteur la réaction est réalisée en présence de 0,2 à 5% en moles d'hydrogène pour fabriquer un polymère de basse masse moléculaire, en ce que les effluents de ces deux réacteurs sont détendus puis dirigés vers un ensemble de deux séparateurs interconnectés de façon à mélanger efficacement les polymères fabriqués dans les deux réacteurs en recyclant dans le circuit d'alimentation du premier réacteur le moins possible d'hydrogène de telle façon que la proportion d'hydrogène dans ledit premier réacteur demeure inférieure à 0,1% en moles.

2. Procédé selon la revendication 1, caractérisé en ce que:

— l'effluent du premier réacteur est évacué, au travers d'une vanne de détente, dans un premier séparateur fonctionnant sous pression de 150 à 500 bars, l'éthylène ainsi séparé étant recyclé vers ledit premier réacteur et le polymère séparé étant évacué dudit premier séparateur vers un mélangeur.
— l'effluent du second réacteur est évacué, au travers d'une vanne de détente, dans ledit mélangeur, et
— un second séparateur fonctionnant sous pression de 100 à 400 bars est alimenté par les effluents provenant du mélangeur, l'éthylène ainsi séparé étant au moins en partie recyclé vers le second réacteur et le mélange polymère séparé étant évacué dudit second séparateur vers une trémie de dégazage fonctionnant sous pression de 1 à 10 bars, le polymère sortant de ladite trémie étant récupéré tandis que l'éthylène gazeux séparé dans la trémie est recyclé vers l'une et/ou l'autre des réacteurs.

3. Procédé selon la revendication 1, caractérisé en ce que:

— l'effluent du premier réacteur est évacué, au traverse d'une vanne de détente dans un mélangeur,
— l'effluent du second réacteur est évacué, au travers d'une vanne de détente, dans un premier séparateur fonctionnant sous pression de 150 à 500 bars, l'éthylène ainsi séparé étant recyclé vers les second réacteur et le polymère séparé étant évacué dudit premier séparateur vers ledit mélangeur, et

— un second séparateur fonctionnant sous pression de 100 à 400 bars est alimenté par les effluents provenant du mélangeur, l'éthylène ainsi séparé étant au moins en partie recyclé vers le second réacteur et le mélange polymère séparé étant évacué dudit second séparateur vers une trémie de dégazage fonctionnant sous pression de 1 à 10 bars, le polymère sortant de ladite trémie étant récupéré tandis que l'éthylène gazeux séparé dans la trémie est recyclé vers l'un et/ou l'autre des réacteurs.

4. Procédé selon l'une des revendications 1 à 3, caractérisé en ce que le rapport de la concentration d'hydrogène dans le second réacteur à la concentration d'hydrogène dans le premier réacteur est supérieur ou égal à 5.

5. Procédé selon l'une des revendications 1 à 4, caractérisé en ce que les débits d'alimentation de chaque réacteur sont choisis de telle sorte que la part du polymère total produite dans le premier réacteur soit comprise entre 20 et 60% en poids.

6. Procédé selon la revendication 2, caractérisé en ce que le premier séparateur est refroidi par injection, entre la vanne de détente du premier réacteur et l'entrée dudit séparateur, d'éthylène froid à une pression inférieure à celle du premier séparateur.

7. Procédé selon l'une des revendications 1 à 6, caractérisé en ce que la polymérisation est effectuée en présence de 1 à 50% en poids d'un hydrocarbure inerte.

8. Procédé selon l'une des revendications 1 à 7, caractérisé en ce que la polymérisation est effectuée en présence d'un système catalytique de type Ziegler comprenant d'une part au moins un composé halogéné de métal de transition et d'autre part au moins un activateur choisi parmi les hydrures et les composés organométalliques des métaux des groupes I à III de la Classification Périodique, le temps de séjour du système catalytique dans chaque réacteur étant compris entre 5 et 80 secondes environ.

9. Appareil pour la mise en oeuvre du procédé selon la revendication 1, comprenant un premier réacteur, un premier séparateur, un vanne de détente située à la sortie du premier réacteur et reliée au premier séparateur, un premier hypercompresseur dont l'entrée est reliée à la sortie du premier séparateur et dont la sortie est reliée au premier réacteur, un second réacteur, caractérisé en ce qu'il comprend en outre un mélangeur relié à la base du premier séparateur, une vanne de détente située à la sortie du second réacteur et reliée au mélangeur, un second séparateur relié à la sortie du mélangeur, un second hypercompresseur dont l'entrée est reliée à la sortie du second séparateur et dont la sortie est reliée au second réacteur, une trémie, une vanne de détente située à la base du second séparateur et reliée à la trémie, un compresseur dont l'entrée est reliée au sommet de la trémie et dont la sortie est reliée à l'entrée du compresseur, une source d'hydrogène connectée à une entrée du second hypercompresseur et une source d'éthylène connectée à une entrée du premier hypercompresseur.

10. Appareil pour la mise en oeuvre du procédé selon la revendication 1, comprenant un premier réacteur, un second réacteur, un premier séparateur, une vanne de détente située à la sortie du second réacteur et reliée au premier séparateur, caractérisé en ce qu'il comprend en outre un mélangeur, une vanne de détente située à la sortie du premier réacteur et reliée au mélangeur, un second séparateur relié à la sortie du mélangeur, un premier hypercompresseur dont l'entrée est reliée au second séparateur et dont la sortie est reliée au premier réacteur, un second hypercompresseur dont l'entrée est reliée au second séparateur et dont la sortie est reliée au second réacteur, une trémie, une vanne de détente située à la base du second séparateur et reliée à la trémie, un compresseur dont l'entrée est reliée au sommet de la trémie et dont la sortie est reliée à l'entrée du premier hypercompresseur, une source d'éthylène connectée à l'entrée du compresseur et une source d'hydrogène connectée à l'entrée du second hypercompresseur.

**Claims**

1. A process for polymerizing ethylene or copolymerizing ethylene with an $\alpha$-olefin or terpolymerizing ethylene with an $\alpha$-olefin and a non-conjugated diolefin at a pressure between 600 and 3,000 bars and at a temperature between 160°C and 320°C in two reactors operating in parallel, characterized in effecting the reaction in the first reactor in the presence of less than 0.1 mole percent of hydrogen for the purpose of producing a polymer of high molecular weight, effecting the reaction in a second reactor in the presence of 0.2 to 5 mole percent of hydrogen for the purpose of producing a polymer of low molecular weight, expanding the effluents from these two reactors, and transferring said expanded effluents to a set of two separators so interconnected as to efficiently mix the polymers produced in the two reactors by recycling the least amount of hydrogen possible in the supply circuit of the first reactor in such a manner that the proportion of hydrogen in said first reactor remains less than 0.1 mole percent.

2. Process according to claim 1, characterized in that:

— the effluent of said first reactor is evacuated through an expansion valve into a first separator operating at a pressure of 150 to 500 bars, the ethylene thus separated is recycled to said first reactor, and the separated polymer is evacuated from said first separator to a mixer;

— the effluent of said second reactor is evacuated through an expansion valve into said mixer; and

— a second separator operating at a pressure of 100 to 400 bars is fed with the effluents from the mixer, the ethylene thus separated is recycled at least in part to said second reactor and the separated polymer mixture is evacuated from said second separator to a degassing hopper operating at a pressure of 1 to 10 bars, and the polymer leaving said hopper is recovered while the gaseous ethylene separated in the hopper is recycled to at least one of said reactors.

3. Process according to claim 1, characterized in that:

— the effluent of said first reactor is evacuated through an expansion valve into a mixture;

— the effluent of said second reactor is evacuated through an expansion valve into a first separator operating at a pressure of 150 to 500 bars, the ethylene thus separated is recycled to said second reactor, and the separated polymer is evacuated from said first separator to said mixer; and

— a second separator operating at a pressure of 100 to 400 bars is fed with the effluents from the mixer, the ethylene thus separated is recycled at least in part to said second reactor and the separated polymer mixture is evacuated from said second separator into a degassing hopper operating at a pressure of 1 to 10 bars, and the polymer leaving said hopper is recovered while the gaseous ethylene separated in the hopper is recycled to at least one of said reactors.

4. Process according to one of claims 1 to 3, characterized in that the ratio of the hydrogen concentration in the second reactor to the hydrogen concentration in the first reactor is equal to or larger than 5.

5. Process according to one of claims 1 to 4, characterized in that the supply rates to each reactor are so selected that the portion of the total polymer produced in the first reactor is between 20 and 60% by weight.

6. Process according to claim 2, characterized in that the first separator is cooled by injecting cold ethylene at a pressure less than that of the first separator between the expansion valve of the first reactor and the intake of said first separator.

7. Process according to one of claims 1 to 6, characterized in that polymerization is effected in the presence of 1 to 50% by weight of an inert hydrocarbon.

8. Process according to one of claims 1 to 7, characterized in that polymerization is effected in the presence of a catalytic system of the Ziegler type comprising on the one hand at least a transition metal halogen compound and on the other hand at least an activator selected from hydrides and organometallic compounds of metals of groups I to III of the Periodic Classification, the dwell time of the catalytic system in each reactor being between about 5 and 80 seconds.

9. Apparatus for carrying out the process of claim 1, comprising a first reactor, a first separator, an expansion valve located at the outlet of the first reactor and connected to the first separator, a first hypercompressor of which the intake is connected to the outlet of the first separator and of which the outlet is connected to the first reactor, a second reactor, characterized in that it further comprises a mixer connected to the base of the first separator, an expansion valve located at the outlet of the second reactor and connected to the mixer, a second separator connected to the outlet of the mixer, a second hypercompressor of which the intake is connected to the outlet of the second separator and of which the outlet is connected to the second reactor, a hopper, an expansion valve located at the base of the second separator and connected to the hopper, a compressor of which the intake is connected to the top of the hopper and of which the outlet is connected to the intake of the second hypercompressor, a hydrogen source connected to one intake of the second hypercompressor and an ethylene source connected to an intake of the first hypercompressor.

10. Apparatus for carrying out the process of claim 1, comprising a first reactor, a second reactor, a first separator, an expansion valve located at the outlet of the second reactor and connected to the first separator, characterized in that it further comprises a mixer, an expansion valve located at the outlet of the first reactor and connected to the mixer, a second separator connected to the outlet of the mixer, a first hypercompressor of which the intake is connected to the second separator and of which the outlet is connected to the first reactor, a second hypercompressor of which the intake is connected to the second separator and of which the outlet is connected to the second reactor, a hopper, an expansion valve located at the base of the second separator and connected to the hopper, a compressor of which the intake is connected to the top of the hopper and of which the outlet is connected to the intake of the first hypercompressor, an ethylene source connected to the intake of the compressor and a hydrogen source connected to the intake of the second hypercompressor.

**Patentansprüche**

1. Verfahren zur Polymerisation von Äthylen, Copolymerisation von Äthylen mit einem $\alpha$-Olefin oder Terpolymerisation von Äthylen mit einem $\alpha$-Olefin und einem nicht konjugierten Diolefin unter einem Druck zwischen 600 und 3000 bar und bei einer Temperatur zwischen 160° und 320°C in zwei parallel arbeitenden Reaktoren, dadurch gekennzeichnet, daß im ersten Reaktor die Reaktion in Anwesenheit von weniger als 0,1 Mol% Wasserstoff durchgeführt wird, um ein Polymer erhöhten Molekulargewichts zu erzeugen, und in dem zweiten Reaktor die Reaktion in Anwesenheit von 0,2 bis 5 Mol% Wasserstoff durchgeführt wird, um ein Polymer geringen Molekulargewichts herzustellen, daß die Abwässer dieser beiden Reaktoren entspannt und dann zu einer Einheit aus zwei Separatoren geleitet werden, die so untereinander verbunden sind, daß die in den beiden Reaktoren hergestellten Polymere wirksam vermischt werden, wobei in den Speisekreis des ersten Reaktors so wenig Wasserstoff als möglich zurückgeführt wird, derart, daß der Wasserstoffanteil im genannten ersten Reaktor unter 0,1 Mol% bleibt.

2. Verfahren nach Anspruch 1, dadurch gekennzeichnet, daß

— das Abwasser des ersten Reaktors über ein Druckminderventil in einen ersten, unter einem Druck von 150 bis 500 bar arbeitenden Separator abgeführt wird, wobei das so abgetrennte Äthylen zum genannten ersten Reaktor zurückgeführt und das abgetrennte Polymer aus dem genannten ersten Separator zu einem Mischer geführt wird,

— das Abwasser des zweiten Reaktors über ein Druckminderventil in den genannten Mischer geführt wird, und

— ein zweiter, unter einem Druck von 100 bis 400 bar arbeitender Separator mit den aus dem Mischer herrührenden Abwässern gespeist wird, wobei das so abgetrennte Äthylen zumindest teilweise in den zweiten Reaktor zurückgeführt wird und die abgetrennte polymere Mischung aus dem genannten zweiten Separator in einem unter einem Druck von 1 bis 10 bar arbeitenden Entgasungsbehälter geführt wird, und wobei das aus dem genannten Behälter austretende Polymer verwertet wird, während das in dem Behälter abgetrennte gasförmige Äthylen in den einen und/oder den anderen Reaktor zurückgeführt wird.

3. Verfahren nach Anspruch 1, dadurch gekennzeichnet, daß

— das Abwasser des ersten Reaktors über ein Drukminderventil in einen Mischer geführt wird,

— das Abwasser des zweiten Reaktors über ein Druckminderventil in einen ersten, unter einem Druck von 150 bis 500 bar arbeitenden ersten Separator geführt wird, wobei das so abgetrennte Äthylen zum zweiten Reaktor zurückgeführt und das abgetrennte Polymer von dem genannten ersten Separator in den genannten Mischer geführt wird, und

— ein zweiter, unter einem Druck von 100 bis 400 bar arbeitender Separator mit den aus dem Mischer herrührenden Abwässern gespeist wird, wobei das so abgetrennte Äthylen zumindest teilweise in den zweiten Reaktor zurückgeführt wird und die abgetrennte polymere Mischung aus dem genannten zweiten Separator in einen unter einem Druck von 1 bis 10 bar arbeitenden Entgasungsbehälter geführt wird, und wobei das aus dem genannten Behälter austretende Polymer verwertet wird, während das in dem Behälter abgetrennte gasförmige Äthylen in den einen und/oder den anderen Reaktor zurückgeführt wird.

4. Verfahren nach einem der Ansprüche 1 bis 3, dadurch gekennzeichnet, daß das Verhältnis der Konzentration des Wasserstoffs im zweiten Reaktor zur Wasserstoffkonzentration im ersten Reaktor gleich oder größer als 5 ist.

5. Verfahren nach einem der Ansprüche 1 bis 4, dadurch gekennzeichnet, daß die Speiseleistung jedes Reaktors so gewählt wird, daß der in dem ersten Reaktor produzierte Teil des gesamten Polymers zwischen 20 und 60 Gew.-% liegt.

6. Verfahren nach Anspruch 2, dadurch gekennzeichnet, daß der erste Separator durch Einspritzen von kaltem Äthylen unter einem Druck unterhalb jenes des ersten Separators zwischen dem Druckminderventil des ersten Reaktors und dem Einlaß des genannten Separators gekühlt wird.

7. Verfahren nach einem der Ansprüche 1 bis 6, dadurch gekennzeichnet, daß die Polymerisation in Anwesenheit von 1 bis 50 Gew.-% eines inerten Kohlenwasserstoffes durchgeführt wird.

8. Verfahren nach einem der Ansprüche 1 bis 7, dadurch gekennzeichnet, daß die Polymerisation in Anwesenheit eines Katalysatorsystems des Typs Ziegler durchgeführt wird, das einerseits mindestens eine Halogenverbindung eines Übergangsmetalls und anderseits mindestens einen Aktivator, ausgewählt aus der Gruppe bestehend aus den Hydriden und den organometallischen Verbindungen der Metalle der Gruppen I bis III des Periodensystems, enthält, wobei die Aufenthaltszeit des Katalysatorsystems in jedem Reaktor etwa zwischen 5 und 80 s beträgt.

9. Vorrichtung zur Durchführung des Verfahrens nach Anspruch 1, mit einem ersten Reaktor, einem ersten Separator, einem am Auslaß des ersten Reaktors angeordneten und mit dem ersten Separator verbundenen Druckminderventil, einem ersten Hyperkompressor, dessen Einlaß mit dem Auslaß des ersten Separators und dessen Ausgang mit dem ersten Reaktor verbunden ist, und einem zweiten Reaktor, dadurch gekennzeichnet, daß sie darüberhinaus enthält: einen an die Basis des ersten Separators angeschlossenen Mischer, eine am Auslaß des zweiten Reaktors angeordnetes und mit dem Mischer verbundenes Druckminderventil, einen zweiten, mit dem Auslaß des Mischers verbundenen Separator, einen zweiten Hyperkompressor, dessen Einlaß mit dem Auslaß des zweiten Separators und dessen Auslaß mit dem zweiten Reaktor verbunden ist, einen Behälter, ein an der Basis des zweiten Separators angeordnetes und mit dem Behälter verbundenes Druckminderventil, einen Kompressor, dessen Einlaß mit dem oberen Ende des Behälters und dessen Auslaß mit dem Einlaß des Kompressors verbunden ist, eine mit einem Einlaß des zweiten Hyperkompressors verbundene Wasserstoffquelle und eine an einen Einlaß des ersten Hyperkompressors angeschlossene Äthylenquelle.

10. Vorrichtung zur Durchführung des Verfahrens nach Anspruch 1, mit einem ersten Reaktor, einem zweiten Reaktor, einem ersten Separator und einem am Auslaß des zweiten Reaktors angeordneten und mit dem ersten Separator verbundenen Druckminderventil, dadurch gekennzeichnet, daß sie darüberhinaus enthält: einen Mischer, ein am Auslaß des ersten Reaktors angeordnetes und mit dem Mischer verbundenes Druckminderventil, einen an den Auslaß des Mischers angeschlossenen zweiten Separator, einen ersten Hyperkompressor, dessen Einlaß mit dem zweiten Separator und dessen Auslaß mit dem ersten Reaktor verbunden ist, einen zweiten Hyperkompressor, dessen Einlaß an den zweiten Separator und dessen Auslaß en den zweiten Reaktor angeschlossen ist, einen Behälter, ein an der Basis des zweiten Separators angeordnetes und mit dem Behälter verbundenes Druckminderventil, einen Kompressor, dessen Einlaß mit dem oberen Ende des Behälters und dessen Auslaß mit dem Einlaß des ersten Hyperkompressors verbunden ist, eine mit dem Einlaß des Kompressors verbundene Äthylenquelle und eine mit dem Einlaß des zweiten Hyperkompressors verbundene Wasserstoffquelle.